# EUROPÄISCHE PATENTSCHRIFT

(11) **EP 4 526 623 B1**
(45) Veröffentlichungstag und Bekanntmachung des Hinweises auf die Patenterteilung: **22.04.2026**
(21) Anmeldenummer: 23727458.4
(22) Anmeldetag: 11.05.2023
(51) Int. Cl.: G01B 11/25, G06T 7/13

(54) **VERFAHREN, COMPUTERPROGRAMM UND VORRICHTUNG ZUR AUSRICHTUNG VON KAMERAS**
METHOD, COMPUTER PROGRAM, AND DEVICE FOR ALIGNING CAMERAS
PROCÉDÉ, PROGRAMME D'ORDINATEUR ET DISPOSITIF DESTINÉS À L'ALIGNEMENT DE CAMÉRAS

(30) Priorität: 19.05.2022 DE 102022112625
(43) Veröffentlichungstag der Anmeldung: 26.03.2025
(73) Patentinhaber: ISRA VISION GMBH, 64293 Darmstadt (DE)
(72) Erfinder: NEUGEBAUER, Peter Johannes, 64347 Griesheim (DE)
(74) Vertreter: WSL Patentanwälte Partnerschaft mbB
(86) Internationale Anmeldenummer: PCT/EP2023/062538
(87) Internationale Veröffentlichungsnummer: WO 2023/222493

(56) Entgegenhaltungen:
- DE-A1- 102018 109 586
- DE-A1- 102019 110 729
- US-A1- 2010 329 538
- US-A1- 2014 112 573

## Beschreibung

Die Erfindung betrifft ein Verfahren und eine Vorrichtung zur Ausrichtung einer vorbestimmten Anzahl von realen Kameras für die Vermessung eines realen dreidimensionalen Objekts mit den Kameras und einem Muster in einem dreidimensionalen Koordinatensystem.

Zur berührungslosen Vermessung von insbesondere dreidimensionalen Objekten in einem dreidimensionalen Koordinatensystem wird häufig das Verfahren der Stereoskopie angewendet, bei dem mittels eines Projektors ein Muster auf die Objektoberfläche projiziert und das auf die Objektoberfläche projizierte Muster mit mindestens zwei Kameras aufgenommen wird. Ein solches Verfahren ist beispielsweise aus dem Dokument DE 10 2018 108 874 A1 bekannt. Bei dem bekannten Verfahren werden Kameras verwendet, welche intrinsisch und extrinsisch kalibriert sind. Um eine robustere und weniger störanfällige Vermessung zu erzielen, wird bei der Musterprojektion eine flächige Kodierung und eine zeitliche Kodierung erzeugt, indem ein (vollständig) flächig kodiertes Muster verwendet und das auf die Objektoberfläche projizierte Muster mit den Kameras aufgenommen wird. Ferner wird ein zeitlich kodiertes Muster mit flächig unterschiedlicher Kodierung mehrfach nacheinander projiziert und es werden mehrere Aufnahmen des auf die Oberfläche projizierten Musters nacheinander mit den Kameras jeweils zeitgleich getriggert erzeugt.

Das bekannte Verfahren ist gut für ein Objekt geeignet, das in großer Stückzahl oder in ähnlicher Form und bei gleichbleibenden Bedingungen vermessen wird. Werden an einem Vermessungsplatz eine Vielzahl unterschiedlicher Objekte vermessen, ist das obige Verfahren durch die Kalibrierung recht aufwändig.

Werden an einem Messplatz unterschiedliche Objekte mit einer Vielzahl von Kameras vermessen, so muss auch die Anordnung und Ausrichtung der Kameras geändert und an die jeweilige Messaufgabe angepasst werden. Bei einer großen Anzahl von Kameras sind die Einrichtung und Kalibrierung des Messplatzes, insbesondere die Ausrichtung der Vielzahl von Kameras sehr aufwändig.

Aus dem Dokument DE 10 2012 109 351 A1 ist eine Auswerteeinheit zur Verarbeitung von Bildern und/oder Bildsequenzen von Messflächen, die von einem Crashfahrzeug detektierbar sind, bekannt. Zur Ausrichtung der Messkameras können Orientierungskameras verwendet werden, die fest auf den Messkameras angebracht sind. Alternativ oder zusätzlich können mindestens drei im Messraum angeordnete Referenzmarkierungen aufgenommen werden. Das Dokument DE 10 2009 035 840 A1 offenbart ein Verfahren zum Positionieren und/oder Einstellen von Hochgeschwindigkeitskameras für Crashversuche an Kraftfahrzeugen, bei dem Positionen, Winkellagen und/oder Brennweiten der Hochgeschwindigkeitskameras mit Hilfe von photogrammetrischen Orientierungsdaten aus einer Datenbank oder eine CAD-System berechnet und mit photogrammetrischen Mitteln reproduzierbar positioniert und/oder eingestellt werden. Schließlich beschreibt das Dokument US 2017/0026636 A1 ein Verfahren zur ortsgenauen Projektion einer Markierung auf einem Objekt, bei dem ein 2-dimensionales oder 3-dimensionales Modell des Objekts verwendet wird.

DE 10 2018 109586 A1, DE 10 2019 110729 A1, US 2014/112573 A1 und US 2010/329538 A1 offenbaren die 3D-Erfassung eines Objektes mit einer Mehrheit von Kameras.

Die Aufgabe der vorliegenden Erfindung besteht somit darin, ein Verfahren anzugeben beziehungsweise eine Vorrichtung zu schaffen, mit der eine einfache und zeitsparende Ausrichtung der Kameras für eine genaue Vermessung von Objekten mit beliebiger Form und Größe ermöglicht wird.

Die obige Aufgabe wird gelöst durch ein Verfahren mit den Merkmalen des Anspruchs 1, ein Computerprogramm mit den Merkmalen des Anspruchs 7, eine Vorrichtung mit den Merkmalen des Anspruchs 8 sowie ein System mit den Merkmalen des Anspruchs 15.

Insbesondere wird die Aufgabe gelöst durch ein Verfahren zur Ausrichtung einer vorbestimmten Anzahl von realen Kameras für die Vermessung eines realen dreidimensionalen Objekts mit den Kameras und einem Muster in einem vorgegebenen Koordinatensystem, wobei für die Vermessung das Muster auf die Oberfläche des realen Objekts mittels mindestens eines Projektors projiziert und dieses Muster mit jeder realen Kamera der vorbestimmten Anzahl zumindest abschnittsweise aufgenommen wird, wobei ein dreidimensionales virtuelles Modell des dem realen Objekt entsprechenden Idealobjekts vorhanden ist, mit folgenden Schritten:
a) Ausrichten des mindestens einen Projektors an der Oberfläche des realen Projekts derart, dass die Lage des Musters auf der Oberfläche des realen Objekts einer vorgegebenen Lage des Musters an dem virtuellen Modell entspricht,
b) Festlegung oder Bereitstellen einer Vielzahl von Zielmarken auf der Oberfläche des Idealobjekts in dem dreidimensionalen virtuellen Modell, die der zu vermessenden Oberfläche des realen Objekts entspricht,
c) automatische Ermittlung einer Referenzinformation für jede Kamera, wobei die Referenzinformation eine Identifikationsinformation umfasst, welche die Information beinhaltet, welche mindestens eine Zielmarke der Vielzahl von Zielmarken die jeweilige Kamera erfasst, wenn die jeweilige Kamera und der Projektor des Musters in einer vorgegebenen Weise angeordnet und ausgerichtet sind, und die Referenzinformation außerdem eine zur jeweiligen Kamera und Zielmarke zugehörige Ortsinformation umfasst, welche die Information beinhaltet, wo in einem erfassten Bild des Sichtbereichs der jeweiligen Kamera diese mindestens eine Zielmarke erscheint, wenn die jeweilige Kamera und der mindestens eine Projektor des Musters in der vorgegebenen Weise angeordnet und ausgerichtet sind, wobei die Ermittlung der Referenzinformation für jede Kamera basierend auf dem dreidimensionalen virtuellen Modell des Idealobjekts und entsprechenden virtuellen Repräsentationen der Kameras und des Musters durchgeführt wird, und
d) Aufnehmen eines Bildes der Oberfläche eines realen Objekts mit einer realen Kamera, automatisches Berechnen von Hinweisen und/oder Steuerinformationen zum Finden der festgelegten Zielmarken im Bild der jeweiligen realen Kamera und zum Ausrichten der jeweiligen realen Kamera mithilfe des realen Objekts basierend auf der ermittelten Referenzinformation zur jeweiligen Kamera sowie Bereitstellen der Hinweise und/oder Steuerinformationen zur jeweiligen Kamera an einer vorgegebenen Schnittstelle,
wobei Schritt d) für jede Kamera der vorbestimmten Anzahl der Kameras durchgeführt wird.

Wie bereits oben erläutert wurde, wird das oben dargestellte Verfahren verwendet, um einen Messplatz für die Vermessung eines realen dreidimensionalen Objekts, z.B. eine Karosserie, ein Gehäuseteil, ein Batteriemodul, eine Windschutzscheibe oder dergl. einzurichten, insbesondere die Kameras des Messplatzes auszurichten. Wenn ein derartiger Messplatz für sehr verschiedene Objekte mit unterschiedlicher Gestaltung und Abmessung und eine Vielzahl von Kameras verwendet wird, wird eine solche Einrichtung unter Verwendung des obigen Ausrichtungs-Verfahrens vereinfacht und kann in einem kürzeren Zeitraum durchgeführt werden. Die unten noch genauer dargestellte automatische Generierung von Referenzinformationen und Hinweisen und/oder Steuerinformationen für die Ausrichtung ermöglichen eine effektive Darstellung und automatische Hilfestellung bzw. Durchführung der Ausrichtung, beispielsweise auf einem Bildschirm / Monitor, so dass automatisch auch die für die Einrichtung des Messplatzes und somit für die gesamte Vermessung notwendige Zeit verringert wird.

Das oben dargestellte Verfahren kann als ein computerimplementiertes Verfahren, d.h. als ein mit einer Recheneinheit (Computer) durchgeführtes Verfahren, realisiert werden, insbesondere in den Arbeitsschritten der automatischen Ermittlung der Referenzinformation und der automatischen Berechnung von Hinweisen und/oder Steuerinformationen zum Finden der Zielmarken zu jeder realen Kamera und Ausrichten der realen Kameras. Auch die Festlegung einer Vielzahl von Zielmarken auf der Oberfläche des Idealobjekts kann automatisch oder halbautomatisch, d.h. teilweise automatisch und teilweise manuell, oder vollständig manuell geschehen. Bei einer manuellen Festlegung kann das computerimplementierte Verfahren derart eingerichtet sein, dass es die (manuelle) Festlegung der Vielzahl von Zielmarken auf der Oberfläche des Idealobjekt interaktiv anfordert, beispielsweise durch Eingabe in einer entsprechenden, vorgegebenen Schnittstelle, und die eingegebenen Zielmarken in einer Speichereinheit speichert. Bei einer halbautomatischen oder automatischen Festlegung der Zielmarken basierend auf dem dreidimensionalen virtuellen Modell des Objekts können die Zielmarken derart gewählt werden, dass sie in dem Sichtbereich jeder Kamera (wenn diese ausgerichtet ist) eine vorgegebene Anzahl von Zielmarken über das gesamte Bild der jeweiligen Kamera verteilt angeordnet sind.

Die nach der Ausrichtung der Kameras und ggf. erforderlichen intrinsischen und/oder extrinsischen Kalibrierung der Kameras folgende Vermessung des dreidimensionalen Objekts von der vorgegebenen Anzahl von Kameras, welche die den jeweiligen Kameras zugewandte Oberfläche erfasst, kann beispielsweise mittels des oben bereits beschriebenen Verfahrens der Stereoskopie durchgeführt werden. Das hierfür erforderliche Muster, das auf die Oberfläche des Objekts projiziert wird, kann mittels eines oder mittels mehrerer Projektoren erzeugt werden.

Das vorgegebene Koordinatensystem ist beispielsweise ein karthesisches Koordinatensystem, in einem Ausführungsbeispiel kann als Koordinatensystem das Koordinatensystem des Objekts verwendet werden. Das Koordinatensystem wird als globales Koordinatensystem eingesetzt, wobei entsprechende Transformationsmatrizen zur Verfügung gestellt werden, um die Kamerakoordinaten und/oder die Musterkoordinaten in das vorgegebene Koordinatensystem umzurechnen.

Das dreidimensionale virtuelle Modell ist ein virtuelles Modell des Idealobjekts, das dem zu vermessenden realen Objekt entspricht, z.B. ein CAD-Modell des Idealobjekts. Üblicherweise werden eine Vielzahl von realen Objekten vermessen, die alle im Wesentlichen dem Idealobjekt entsprechen und jeweils kleinere oder größere, beispielsweise produktions- und/oder materialbedingte Abweichungen von dem Idealobjekt aufweisen. Das Modell des Idealobjekts ist beispielsweise in einer Speichereinheit, die mit der Recheneinheit verbunden ist, gespeichert und kann dort abgerufen werden.

Erfindungsgemäß ist das dreidimensionale virtuelle Modell des Idealobjekts bekannt und in diesem Modell werden eine Vielzahl von Zielmarken auf der Oberfläche des Idealobjekts identifiziert. Diese Zielmarken stellen virtuelle Marken dar und stellen beispielsweise ausgezeichnete Stellen auf der Oberfläche des Idealobjekts wie beispielsweise Löcher, Kanten, Vorsprünge und dergl. dar oder sind im Bereich dieser Stellen angeordnet, die in dem Kamerabild einen Kontrast zu ihrer Umgebung aufweisen und daher gut erkennbar sind, z.B. anhand ihrer Form. Zum Beispiel ist jede Zielmarke ein kleiner Ausschnitt aus der Oberfläche des dreidimensionalen Modells, beispielsweise mehrere Punkte/Pixel des Modells umfassend. Der Objektoberflächen-Ausschnitt in dem virtuellen Modell kann hierbei das in diesem Ausschnitt auf der Oberfläche des virtuellen Modells vorhandene und auf die Oberfläche projizierte Muster mit umfassen. Alternativ zur flächigen Kodierung kann die Zielmarke eine eindeutige zeitliche Kodierung in einem oder mehreren Pixeln des virtuellen Modells umfassen, wenn auf dieses/diese ein zeitlich veränderliches Muster projiziert wird. Es ist von großem Vorteil, die Zielmarken an dem dreidimensionalen virtuellen Modell des Idealobjekts und dem projizierten Muster zu orientieren, um eine schnellere Ausrichtung zu ermöglichen. Die Zielmarken werden in einer vorgegebenen Dichte bzw. Abstand auf der Oberfläche des Idealobjekts festgelegt, wobei in einem Ausführungsbeispiel die Zielmarken individuell und separat für jedes virtuelle Modell/Objekt festgelegt werden.

Mithilfe des dreidimensionalen virtuellen Modells des Idealobjekts sowie entsprechenden virtuellen Repräsentationen der Kameras und des Musters wird für jede Kamera der vorbestimmten Anzahl von Kameras eine Referenzinformation ermittelt, wobei die Referenzinformation eine Identifikationsinformation und Ortsinformationen umfasst. Die Referenzinformation wird berechnet ausgehend von dem dreidimensionalen virtuellen Modell des Idealobjekts und den darauf festgelegten Zielmarken. Ferner ist für jede Kamera festgelegt und somit vor der Berechnung der Referenzinformation bekannt, wo sich die jeweilige Kamera in dem vorgegebenen Koordinatensystem befindet, d.h. ihre Lage in dem dreidimensionalen Koordinatensystem, und in welche Richtung die jeweilige Sichtachse ausgerichtet ist. Diese bekannten Daten werden als Repräsentation der jeweiligen Kamera bezeichnet. Weiter ist festgelegt und somit bekannt, wo sich der das Muster projizierende mindestens Projektor befindet und in welche Richtung dieser das Muster projiziert, d.h. in welche Richtung er ausgerichtet ist. Diese Daten werden als Repräsentation des Musters bezeichnet. Das Muster kann mit einem einzigen Projektor, zwei Projektoren oder einer Vielzahl von Projektoren erzeugt werden, wobei bei der Verwendung mehrerer Projektoren selbstverständlich für jeden Projektor die jeweilige Repräsentation bekannt ist. Aus diesen bekannten Daten wird in dem Verfahren die Referenzinformation rein modellhaft/virtuell berechnet, wobei die ermittelte Referenzinformation einer Kamera als Referenz für die Ausrichtung der jeweiligen realen Kamera dient, wie dies unten genauer beschrieben wird. In einem Ausführungsbeispiel können zur Berechnung der Referenzinformation bekannte Methoden der Photogrammetrie (z.B. Nahbereichsphotogrammetrie) verwendet werden.

Die einen Bestandteil der Referenzinformation bildende Identifikationsinformation umfasst separat für jede Kamera die Information, welche mindestens eine Zielmarke der Vielzahl der Zielmarken von der jeweiligen Kamera erfasst wird, d.h. welche mindestens eine Zielmarke in dem von der jeweiligen Kamera erzeugten Bild erscheint. Beispielsweise können die Zielmarken nummeriert sein und die Nummern derjenigen Zielmarke(n) ermittelt werden, die durch die jeweilige Kamera gesehen werden. Dies können z.B. 1 bis 4 Zielmarken sein, die über das Bild der jeweiligen Kamera verteilt angeordnet sind.

Die einen weiteren Bestandteil der Referenzinformation bildende Ortsinformation(en) sind Angaben, welche die Information beinhaltet, wo in einem virtuell berechneten (virtuell erfassten) Bild des Sichtbereichs der jeweiligen (virtuellen) Kamera diese mindestens eine Zielmarke erscheint, wenn die jeweilige Kamera und der Projektor des Musters in der vorgegebenen Weise angeordnet und ausgerichtet sind. Diese Ortsinformation kann beispielsweise die drei- oder zweidimensionalen Lage-/Orts-Koordinaten in einem zur jeweiligen Kamera gehörenden Koordinatensystem oder in einem zweidimensionalen Bildkoordinatensystem umfassen, das die jeweilige Kamera (virtuell) erfasst.

In dem Verfahren wird nach der Ermittlung der Referenzinformation das Ausrichten der realen Kameras durchgeführt. Hierfür werden zuvor die Kameras an den vorgegebenen Positionen in dem vorgegebenen Koordinatensystem angeordnet. Zudem wird/werden vorher auch der/die Projektor(en) für das Muster an den vorgegebenen Positionen in dem vorgegebenen Koordinatensystem angeordnet und ausgerichtet. Nun wird von jeder realen Kamera das von der jeweiligen Kamera aufgenommene Bild der Oberfläche eines realen Objekts, das dem dreidimensionalen virtuellen Modell entspricht, aufgenommen und in einer Analyse mit der Referenzinformation, d.h. mit der zu der jeweiligen Kamera gehörenden Identifikationsinformation und Ortsinformation(en), verglichen. Hierbei ist bei der Aufnahme des Bildes das von dem/den Projektor(en) erzeugte Muster auf die Oberfläche des realen Objekts projiziert. Als Ergebnis des Vergleichs werden Hinweise und/oder Steuerinformationen zum Finden der festgelegten Zielmarken im Bild der jeweiligen realen Kamera und zum Ausrichten der jeweiligen realen Kamera berechnet. Diese Hinweise und/oder Steuerinformationen werden für jede reale Kamera separat berechnet und dann an einer vorgegebenen Schnittstelle, d.h. an einer Schnittstelle der Recheneinheit, bereitgestellt. Anhand der Hinweise und/oder Steuerinformationen kann ein Nutzer und/oder eine entsprechende automatische Einstellvorrichtung jede reale Kamera ausrichten, wenn diese an die automatische Einstellvorrichtung übertragen oder einem Nutzer, z.B. auf einem Bildschirm, dargestellt werden.

In einem Ausführungsbeispiel kann die Berechnung von Hinweisen und/oder Steuerinformationen für jede reale Kamera mehrfach erfolgen, so dass die Ausrichtung in mehreren Schritten durchgeführt wird, was die Genauigkeit der Ausrichtung erhöht. Es wird demnach der Vergleich des von der jeweiligen Kamera erfassten Bildes mit der Referenzinformation mehrfach vorgenommen. Beispielsweise kann nach einer ersten Berechnung und Bereitstellung der Hinweise und/oder Steuerinformationen zur Ausrichtung eine grobe Ausrichtung aller Kameras und anschließend, nach einer zweiten Berechnung und Bereitstellung der Hinweise und/oder Steuerinformationen eine Feinausrichtung erfolgen.

In einem Ausführungsbeispiel sind/ist die Kameras oder ein Teil der vorgegebenen Anzahl der Kameras zumindest näherungsweise intrinsisch kalibriert. Hierdurch kann eine größere Genauigkeit bei der Ausrichtung der Kameras und ggf. des/der Projektors/Projektoren erreicht werden.

In einem Ausführungsbespiel kann zur Bestimmung der Hinweise und/oder Steuerinformationen zur Ausrichtung gegebenenfalls unter Verwendung eines auf die Oberfläche des realen Objekts projizierten realen Musters die mindestens eine Zielmarke auf der Oberfläche des realen Objekts entsprechend der Identifikationsinformation im Bild der jeweiligen Kamera gesucht werden. Je nachdem, welche Zielmarke(n) in dem Bild der jeweiligen Kamera gefunden wurde, werden anschließend die Hinweise und/oder Steuerinformationen zum Finden der mindestens einen Zielmarke berechnet, d.h. ob die Kamera nach links/rechts/oben/unten gedreht oder nicht bewegt werden muss, so dass die nach der Identifikationsinformation in dem Bild der jeweiligen Kamera gewünschte(n)/vorgegebene(n) Zielmarke(n) nach dem entsprechenden Ausrichten im Bild der Kamera erscheint. Die ausgehend von der Identifikationsinformation berechneten Hinweise und/oder Steuerinformationen können entsprechend Richtungs- und/oder Längeninformationen beinhalten, die beschreiben, in welche Richtung und/oder um welchen Betrag die jeweilige Kamera ausgerichtet werden soll (z.B. verschwenkt werden soll).

In einem Ausführungsbeispiel werden Hinweise und/oder Steuerinformationen zum Ausrichten der jeweiligen reale Kamera durch Vergleichen der Identifikationsinformation und der im Bild der jeweiligen realen Kamera sichtbaren, mindestens einen Zielmarke und/oder durch Vergleichen der ermittelten Ortsinformationen der mindestens einen Zielmarke für die jeweilige Kamera mit der Lage der mindestens einen Zielmarke im Bild der jeweiligen realen Kamera ermittelt. Beispielsweise kann die Ortsinformation die Information beinhalten, dass eine Zielmarke auf der optischen Sichtachse der Kamera angeordnet ist. Beim Vergleichen des realen Bilds der Kamera mit der Ortsinformation wird ermittelt, wie weit der Auftreffpunkt der optischen Sichtachse von der Zielmarke in dem aufgenommenen Bild der realen Kamera entfernt ist und in welcher Richtung die Zielmarke von dem Auftreffpunkt der optischen Sichtachse entfernt liegt. Entsprechend werden Hinweise und/oder Steuerinformationen berechnet, um die Kamera derart zu bewegen, dass die Zielmarke nach dem Ausrichten auf oder in möglichst geringer Entfernung zum Auftreffpunkt der optischen Achse im Bild der realen Kamera liegt. Die aus den Ortsinformationen berechneten Hinweise und/oder Steuerinformationen können entsprechend Richtungs- und/oder Winkel(betrags)informationen beinhalten, die beschreiben, in welche Richtung und/oder um welchen Winkel(betrag) die jeweilige Kamera ausgerichtet werden soll (z.B. verschwenkt werden soll).

In einem Ausführungsbeispiel wird ein Gütemaß für die Abweichung der aktuellen Ausrichtung der jeweiligen realen Kamera von der für die jeweilige Kamera ermittelten Referenzinformation bestimmt und als Hinweis und/oder Steuerinformation an der vorgegebenen Schnittstelle zur Verfügung gestellt. In einem Ausführungsbeispiel deutet ein betragsmäßig oder absolut kleines Gütemaß darauf hin, dass die Ausrichtung bereits sehr gut ist, während ein betragsmäßig oder absolut großes Gütemaß eine noch unzureichende Ausrichtung der jeweiligen Kamera (oder einer vorgegebenen Gruppe von Kameras der Vielzahl der Kameras) signalisiert. Das Gütemaß kann beispielsweise als Summe über alle Zielmarken der jeweiligen Kamera des Quadrats des Abstands (alternativ: des Betrags des Abstands) jeder Zielmarke im Bild der realen Kamera von der ermittelten Ortsinformation der jeweiligen Zielmarke berechnet werden.

In einem Ausführungsbeispiel wird als das auf die Oberfläche projizierte Muster ein vollständig flächig kodiertes Muster verwendet, wobei unter einem vollständig flächig kodierten Muster verstanden wird, dass das Muster zumindest in dem gesamten interessierenden Projektionsbereich, der der auf dem Objekt (bzw. genauer der Oberfläche des Objekts) durch die Projektion dargestellte Ausschnitt des Musters ist, kodiert ist. Grundsätzlich wird bei einer flächigen Kodierung ein Muster projiziert, das eine zweidimensionale Kodierung realisiert, was bedeutet, dass ein Musterpunkt im Kontext des Gesamtmusters oder zumindest einer gewissen Musterumgebung um diesen Musterpunkt eindeutig identifizierbar ist. Als besonders vorteilhaft haben sich hier zweidimensionale Pseudo-Zufallsmuster erwiesen, deren Auflösung so gewählt ist, dass die Kameras die einzelnen Musterpunkte gerade noch sicher auflösen können, d.h. dass die Auflösung der Pixel der Kamera höher ist als die einzelnen Musterpunkte. Mit anderen Worten sind die Pixel der Kamera, auf denen das Muster abgebildet wird, kleiner als die Musterpunkte des in den Pixeln der Kamera abgebildeten Musters. Ein Musterpunkt wird also durch mehrere, vorzugsweise in zwei Dimensionen nebeneinander liegende Pixel der Kamera beziehungsweise des Kamerabildes beschrieben. Wie hoch die Auflösung der Musterpunkte sein muss, damit die Bildverarbeitung die einzelnen Musterpunkte sicher auffinden (d.h. auflösen) kann, hängt von den jeweiligen optischen Gegebenheiten ab und wird ggf. durch den Fachmann bei der Einrichtung des Systems durch theoretische Überlegungen und/oder Versuche ermittelt und entsprechend eingestellt. Grundsätzlich ist es je nach Anwendungsfall möglich, dass ein Musterpunkt in etwa in nur einem Kamerapixel abgebildet wird. Häufig wird es aber sinnvoll sein, wenn ein Musterpunkt eine flächige Anordnung mehrerer Kamerapixel umfasst.

In einem Ausführungsbeispiel kann als Muster das oben beschriebene vollständig flächig oder zeitlich kodierte oder jedes beliebige andere flächige Muster verwendet werden. Für die Projektion eines derartigen Musters kann eine digitale Mikrospiegeleinheit (digital micromirror device, DMD) oder ein anderer Digitalprojektor (digital light processing projector, DLP Projektor) oder ein einfacher (herkömmlicher) Diaprojektor verwendet werden, der ein auf einen transparenten Träger (Dia) (körperlich) vorhandenes Muster projiziert, wobei verschiedene Helligkeiten durch entsprechende Ansteuerung der Projektionslampen und/oder durch Filter unterschiedlicher Dichte, bspw. Graufilter, erzeugt werden, die dem transparenten Träger des Musters (Musterträger) in der Projektion überlagert werden. Ein solcher Diaprojektor kann auch für eine räumliche Verschiebung eines flächigen Musters genutzt werden. Hier ist es ausreichend, den mit dem das Muster tragenden Dia versehenen Diaträger des ansonsten feststehenden Diaprojektors (einschließlich dessen raumfest angeordneten Projektionsoptik) räumlich (minimal) zu verschieben und/oder zu verkippen. Die Bewegung wird dann entsprechend der Projektionsoptik auf der Oberfläche des Objekts dargestellt. Der Vorteil derartiger Diaprojektoren, die für das Durchführen des hier beschriebenen Verfahrens verwendet werden können, liegt darin, dass diese günstig, robust und technisch leicht handhabbar sind. Sie eignen sich daher insbesondere auch für Industrieumgebungen. Bei der Verwendung eines Digitalprojektors können beliebige, auf einem Display darstellbare Muster projiziert werden. Neben flächigen (Struktur-) Mustern können diese bspw. auch eine - an sich strukturlose - Helligkeitsverteilung auf das Objekt projizieren. Dies kann durch Digitalprojektoren vergleichsweise einfach umgesetzt werden. Alternative Grauwertverläufe (oder allgemeiner: Helligkeitsverläufe) können ebenfalls verwendet werden.

Für die Ermittlung der Referenzinformation für jede Kamera und/oder die Berechnung der Hinweise und/oder Steuerinformationen können Verfahren und Methoden der künstlichen Intelligenz (Computer Vision), der Fuzzy-Logik und/oder dergleichen Hilfsmittel zum Einsatz kommen.

In einem Ausführungsbeispiel ist die Schnittstelle mit einer Anzeigeeinrichtung, z.B. einem Bildschirm oder einer Mixed-Reality-Brille oder dergl., und/oder einem Lautsprecher und/oder einer Steuereinrichtung für eine Vielzahl von Motoren verbunden, wobei die Hinweise und/oder Steuerinformationen durch die Anzeigeeinrichtung und/oder den Lautsprecher und/oder die Steuereinrichtung verarbeitet werden und/oder auf der Anzeigeeinrichtung und/oder dem Lautsprecher ausgegeben und/oder durch die Steuereinrichtung derart an die Motoren übermittelt werden, dass die realen Kameras automatisch entsprechend der ermittelten Referenzinformationen der Kameras ausgerichtet werden. Die Hinweise und/oder Steuerinformationen können z.B. als Pfeile und/oder entsprechender Hinweistext dargestellt und/oder ausgegeben werden. Alternativ oder zusätzlich können auf einem Bildschirm das Bild der realen Kamera und ein Bild der Kamera, das die Referenzinformationen verkörpert, übereinander dargestellt werden, z.B. mit verschiedenen Helligkeiten. Die Verkörperung der Referenzinformationen kann beispielsweise die mindestens eine Zielmarke der jeweiligen Kamera so in einem Bild darstellen, dass eine Markierung, z.B. ein Kreis und/oder ein Fadenkreuz, genau an der Stelle angeordnet ist, an der die Zielmarke gemäß der Ortsinformation erscheinen soll. Entsprechend kann der Nutzer sehr leicht feststellen, ob eine Übereinstimmung zwischen dem Bild der realen Kamera und einem Kamerabild, das die Referenzinformationen darstellt, besteht.

In einem Ausführungsbeispiel können, wenn für eine Kamera mindestens zwei Zielmarken für die Ausrichtung vorgesehen sind, die Zielmarken miteinander verbunden werden und gegebenenfalls die Verbindungslinie als weitere Zielmarke in die Ermittlung der Referenzinformation und/oder die Berechnung und Bereitstellung der Hinweise und/oder Steuerinformationen mit einbezogen werden. Entsprechend können die Zielmarken eine beliebige zweidimensionale Form, beispielsweise eine Punkt- oder Streckenform aufweisen, wobei Zielmarken mit unterschiedlichen Formen für eine Kamera kombiniert werden können. Eine linienförmige Zielmarke kann die Orientierung des Nutzers, z.B. bei einer Verwendung der Hinweise und/oder Steuerinformationen auf einem Bildschirm erleichtern.

In einem Ausführungsbeispiel kann zur Durchführung des Verfahrens zusätzlich mindestens eine Hilfskamera vorgesehen sein, welche zur Ausrichtung des mindestens einen Projektors in Schritt a) an dem realen Objekt verwendet wird. Generell beobachtet bei der Ausrichtung des Projektors ein Bediener oder mindestens eine Kamera, beispielsweise die oben erwähnte mindestens eine Hilfskamera, die Szene, insbesondere die Lage des Musters in Bezug auf das reale Objekt. Die Lage des Musters wird dann mit der Lage des gleichen Musters in Bezug auf das virtuelle Modell verglichen (manuell durch einen Bediener oder automatisch mittels der Recheneinheit) und festgestellt, ob die Lage des Musters in Bezug auf das reale Objekt der vorgegebenen Lage des Musters an dem virtuellen Modell entspricht. Basierend auf dem Ergebnis des Vergleichs wird der mindestens eine Projektor in seiner Ausrichtung verändert. Das heißt der Projektor wird anders ausgerichtet, um die Lage des Musters in Bezug auf das reale Objekt so einzustellen, dass diese der vorgegebenen Lage des Musters in Bezug auf das virtuelle Modell entspricht. Hierbei kann das Muster mithilfe von ausgezeichneten und sichtbaren Stellen der Oberfläche des realen Objekts (z.B. Kanten, Löchern und dergl. Strukturen) ausgerichtet werden. Alternativ zu der mindestens einen Hilfskamera kann mindestens eine der Kameras für die Ausrichtung des mindestens einen Projektors verwendet werden, die danach für die Vermessung des realen dreidimensionalen Objekts eingesetzt werden und hierfür (nach der Ausrichtung des mindestens einen Projektors und vor der Vermessung) ausgerichtet werden.

Da für Vermessungsverfahren, beispielsweise die Stereoskopie, mindestens zwei Bilder eines Bildpunktes benötigt werden, wird gemäß einer Ausführungsform vorgeschlagen, einen Musterabschnitt bzw. einen Abschnitt der Objektoberfläche für die sich an die Ausrichtung und Kalibrierung der Kameras anschließende Vermessung des realen Objekts mit mindestens drei Kameras, vorzugsweise vier Kameras, aus verschiedenen Blickwinkeln aufzunehmen. Entsprechend werden die Kameras auch auf gleiche oder ähnliche Abschnitte der Objektoberfläche ausgerichtet. Hierdurch werden bei der Vermessung redundante Bildaufnahmen geschaffen, welche die Robustheit des Vermessungsverfahrens erhöhen.

Durch den Einsatz von mindestens drei, vorzugsweise vier, oder ggf. noch mehr Kameras für einen Muster- bzw. Objektoberflächenabschnitt kann das bei der stereoskopischen Messung in der Praxis bestehende Problem gelöst werden, dass das System sehr sensitiv gegenüber Fehlern in der Kalibrierung reagiert. Um eine stereoskopische Messung durchführen zu können, müssen die beteiligten Kameras sowohl intrinsisch als auch extrinsisch (möglichst genau) kalibriert sein. Hierbei kann eine grobe intrinsische Kalibrierung der Kameras vor der Ausrichtung der Kameras durchgeführt werden und die intrinsische Feinkalibrierung nach der Ausrichtung der Kameras nach obigem Verfahren erfolgen. Alternativ kann die intrinsische und die extrinsische Kalibrierung der Kameras nach bekannten Verfahren der Photogrammetrie durchgeführt werden. Insbesondere können die automatisch, halbautomatisch oder manuell (interaktiv) festgelegten Zielmarken als neue Korrespondenzen in die Bündelblockausgleichsrechnung der Photogrammetrie ein. Dadurch wird die Kalibrierung des Systems auf der zu vermessenden Oberfläche des realen Objekts optimiert, da so neben den photogrammetrischen Markern und Maßstäben viele Passpunkte in die Ausgleichsrechnung einfließen.

Die intrinsische Kalibrierung umfasst die Bestimmung aller Parameter, die die Kamera selbst unabhängig von ihrer Lage beschreiben, also z.B. Brennweite, optische Verzerrungen, Hauptpunktverschiebung, usw. Es sind in der Literatur viele verschiedene Methoden bekannt, wie man eine solche Kalibrierung durchführen kann.

Bei der extrinsischen Kalibrierung wird die Lage der Kamera bezogen auf das vorgegebene Bezugskoordinatensystem bestimmt. Dies kann vorliegend das Koordinatensystem des Objekts sein. Auch dazu gibt es wieder mehrere in der Literatur beschriebene Methoden.

Gemäß eines Ausführungsbeispiels der vorgeschlagenen Vorrichtung sind mindestens zehn Kameras vorgesehen und derart angeordnet, dass ein Abschnitt der Objektoberfläche oder des Musters aus mindestens vier verschiedenen Blickwinkeln aufgenommen wird, wobei - wie bereits beschrieben und sowohl für das vorgeschlagene System als auch für das vorgeschlagene Verfahren - alle Kameras extrinsisch und intrinsisch kalibriert sind.

Ein Ausführungsbeispiel der Vorrichtung sieht vor, dass diese eine Recheneinheit (Computer mit einem entsprechenden Prozessor) aufweist, die dazu eingerichtet ist, das vorbeschriebene Verfahren oder Teile davon durchzuführen (siehe auch obige Erläuterungen zum analogen computerimplementierten Verfahren). Insbesondere ist die Recheneinheit dazu vorgesehen, die Schritte der Ermittlung der Referenzinformation sowie der Berechnung der Hinweise und/oder Steuerinformationen sowie deren Bereitstellung an der vorgegebenen Schnittstelle durchzuführen. Wie oben bereits beschrieben wurde, kann auch der Schritt der Festlegung der Zielmarken mittels der Recheneinheit durchgeführt werden. Hierzu wird auf die vorstehende Erläuterung des Verfahrens verwiesen. Die beschriebenen Vorrichtungsmerkmale wird der Fachmann entsprechend nach Bedarf gemeinsam oder entsprechend der beschriebenen Funktion soweit notwendig in Teilen in das erfindungsgemäß vorgeschlagene System übernehmen.

Die Recheneinheit, die auch als Steuerung, Steuereinrichtung oder Steuereinheit bezeichnet wird, kann eine Verarbeitungseinheit und einen Speicher (auch als Speichereinheit bezeichnet) enthalten, in dem computerausführbare Befehle zur Durchführung der hier beschriebenen Verfahren gespeichert sind. Die Verarbeitungseinheit oder andere beschriebene Einheiten können alle geeigneten Vorrichtungen umfassen, die so konfiguriert sind, dass sie die Durchführung einer Reihe von Schritten veranlassen, um das Verfahren so zu implementieren, dass Anweisungen, wenn sie von der Rechenvorrichtung oder einem anderen programmierbaren Gerät ausgeführt werden, die Ausführung der in den hier beschriebenen Verfahren angegebenen Funktionen/Aktionen/Schritte veranlassen können. Die Verarbeitungseinheit oder andere Einheiten können beispielsweise jede Art von Allzweck-Mikroprozessor oder Mikrocontroller, einen digitalen Signalverarbeitungsprozessor (DSP), eine Zentraleinheit (CPU), eine integrierte Schaltung, ein Field Programmable Gate Array (FPGA), einen rekonfigurierbaren Prozessor, andere geeignet programmierte oder programmierbare Logikschaltungen oder eine beliebige Kombination davon umfassen. Bei dem Speicher kann es sich um jedes geeignete bekannte oder andere maschinenlesbare Speichermedium handeln. Bei dem Speicher (Datenträger) kann es sich um ein nicht flüchtiges, computerlesbares Speichermedium handeln, wie z. B. ein elektronisches, magnetisches, optisches, elektromagnetisches, Infrarot- oder Halbleitersystem, oder eine geeignete Kombination der vorgenannten. Der Speicher kann eine geeignete Kombination aller Arten von Computerspeichern umfassen, die sich entweder innerhalb oder außerhalb der Vorrichtung oder Recheneinheit befinden, wie z. B. Direktzugriffsspeicher (RAM), Festwertspeicher (ROM), Compact-Disc-Festwertspeicher (CDROM), elektrooptischer Speicher, magnetooptischer Speicher, löschbarer programmierbarer Festwertspeicher (EPROM) und elektrisch löschbarer programmierbarer Festwertspeicher (EEPROM), ferroelektrischer RAM (FRAM) oder ähnliches. Der Speicher kann jedes Speichermittel (z. B. Geräte) umfassen, das für die abrufbare Speicherung des von der Verarbeitungseinheit ausführbaren Computerprogramms geeignet ist. Die hier beschriebenen Verfahren können in einer prozeduralen oder objektorientierten Hochsprache oder einer Skriptsprache oder einer Kombination davon implementiert werden, um mit dem Steuergerät oder der Rechnereinheit zu kommunizieren oder deren Betrieb zu unterstützen. Alternativ können die hier beschriebenen Verfahren auch in Assembler oder Maschinensprache implementiert werden. Bei der Sprache kann es sich um eine kompilierte oder interpretierte Sprache handeln. Der Programmcode zum Implementieren der hier beschriebenen Verfahren kann auf dem Speichermedium oder in der Vorrichtung gespeichert werden, beispielsweise auf einem ROM, einer Magnetplatte, einer optischen Platte, einem Flash-Laufwerk oder einem anderen geeigneten Speichermedium. Der Programmcode kann von einer allgemeinen oder speziellen programmierbaren Recheneinheit gelesen werden, um den Computer zu konfigurieren und zu betreiben, wenn das Speichermedium oder die Vorrichtung von dem Computer gelesen wird, um die hier beschriebenen Verfahren durchzuführen. Computerausführbare Anweisungen (Computerprogramm) können in vielen Formen vorliegen, einschließlich Programmmodulen, die von einem oder mehreren Computern oder anderen Geräten ausgeführt werden. Zu den Programmmodulen gehören im Allgemeinen Routinen, Programme, Objekte, Komponenten, Datenstrukturen usw., die bestimmte Aufgaben ausführen oder bestimmte abstrakte Datentypen implementieren. Typischerweise kann die Funktionalität der Programmmodule in verschiedenen Ausführungsformen beliebig kombiniert oder verteilt werden.

Entsprechend wird die obige Aufgabe durch ein Computerprogramm mit Programmcode gelöst, das auf einem maschinenlesbaren Datenträger gespeichert ist, zur Durchführung der Verfahrensschritte nach dem oben angegebenen Verfahren, wenn das Computerprogramm von einer Recheneinheit (Computer) gelesen und auf einer Recheneinheit (Computer) ausgeführt wird.

Die obige Aufgabe wird ferner insbesondere durch eine Vorrichtung zur Ausrichtung einer vorbestimmten Anzahl von realen Kameras für die Vermessung eines realen dreidimensionalen Objekts mit den Kameras und einem Muster in einem vorgegebenen Koordinatensystem gelöst, wobei das Muster auf die Oberfläche des realen Objekts mittels mindestens eines Projektors projizierbar und mit jeder realen Kamera zumindest abschnittsweise aufnehmbar ist, wobei ein dreidimensionales virtuelles Modell eines dem realen Objekt entsprechenden Idealobjekts vorliegt, wobei
A) der mindestens eine Projektor an der Oberfläche des realen Objekts derart ausrichtbar ist, dass die Lage des Musters einer vorgegebenen Lage des Musters an dem virtuellen Modell entspricht,
   wobei die Vorrichtung eine Recheneinheit aufweist, die dazu eingerichtet ist,
B) eine Vielzahl von Zielmarken auf der Oberfläche des Idealobjekts in dem dreidimensionalen virtuellen Modell, die der zu vermessenden Oberfläche des realen Objekts entspricht, festzulegen oder bereitzustellen,
C) automatisch eine Referenzinformation für jede Kamera zu ermitteln, wobei die Referenzinformation eine Identifikationsinformation umfasst, welche die Information beinhaltet, welche mindestens eine Zielmarke der Vielzahl von Zielmarken die jeweilige Kamera erfasst, wenn die jeweilige Kamera und der Projektor des Musters in einer vorgegebenen Weise angeordnet und ausgerichtet sind, und die Referenzinformation außerdem eine zur jeweiligen Kamera und Zielmarke zugehörige Ortsinformation umfasst, welche die Information beinhaltet, wo in einem erfassten Bild des Sichtbereichs der jeweiligen Kamera diese mindestens eine Zielmarke erscheint, wenn die jeweilige Kamera und der mindestens eine Projektor des Musters in der vorgegebenen Weise angeordnet und ausgerichtet sind, wobei die Ermittlung der Referenzinformation für jede Kamera basierend auf dem dreidimensionalen virtuellen Modell des Idealobjekts und entsprechenden virtuellen Repräsentationen der Kameras und des Musters erfolgt, sowie
D) ein Bild der Oberfläche eines realen Objekts mit einer realen Kamera aufzunehmen, automatisch Hinweise und/oder Steuerinformationen zum Finden der festgelegten Zielmarken im Bild der jeweiligen realen Kamera und zum Ausrichten der jeweiligen realen Kamera mithilfe eines realen Objekts basierend auf der ermittelten Referenzinformation zur jeweiligen Kamera zu ermitteln und die Hinweise und/oder Steuerinformationen an einer vorgegebenen Schnittstelle automatisch bereitzustellen,

wobei die Recheneinheit dazu eingerichtet ist, Schritt D) für jede Kamera der vorbestimmten Anzahl von Kameras durchzuführen,
wobei in einer Ausführungsform die Daten des dreidimensionalen virtuellen Modells des Idealobjekts CAD-Daten darstellen und/oder das Muster ein flächig kodiertes Muster darstellt.

In einer Ausführungsform ist die Recheneinheit derart eingerichtet, dass mit jeder realen Kamera und dem realen Objekt unter Verwendung eines auf die Oberfläche des realen Objekts projizierten realen Musters die mindestens eine Zielmarke auf der Oberfläche des realen Objekts entsprechend der Identifikationsinformation im aufgenommenen Bild der jeweiligen Kamera gesucht und anschließend die Hinweise und/oder Steuerinformationen zum Finden der mindestens einen Zielmarke berechnet werden.

In einer Ausführungsform ist die Recheneinheit derart eingerichtet, dass Hinweise und/oder Steuerinformationen zum Ausrichten der jeweiligen reale Kamera durch Vergleichen der Identifikationsinformation und der im Bild der jeweiligen realen Kamera sichtbaren, mindestens einen Zielmarke und/oder durch Vergleichen der ermittelten Ortsinformation der mindestens einen Zielmarke für die jeweilige Kamera mit der Lage der mindestens einen Zielmarke im Bild der jeweiligen realen Kamera ermittelt werden.

In einer Ausführungsform ist die Recheneinheit derart eingerichtet, dass ein Gütemaß für die Abweichung der aktuellen Ausrichtung der jeweiligen realen Kamera von der für die jeweilige Kamera ermittelten Referenzinformation bestimmt und als Hinweis und/oder Steuerinformation an der vorgegebenen Schnittstelle zur Verfügung gestellt wird.

In einer Ausführungsform der Vorrichtung weist diese mindestens eine Hilfskamera auf, welche, wie oben dargestellt, zur Ausrichtung des mindestens einen Projektors eingesetzt werden kann.

In einer Ausführungsform ist die Schnittstelle der Vorrichtung derart eingerichtet, dass die Schnittstelle mit einer Anzeigeeinrichtung, z.B. einem Bildschirm, und/oder einem Lautsprecher und/oder einer Steuereinrichtung für eine Vielzahl von Motoren verbindbar ist, wobei die Hinweise und/oder Steuerinformationen an die Anzeigeeinrichtung und/oder an den Lautsprecher und/oder an die Steuereinrichtung weitergeleitet werden.

Die obige Aufgabe wird ferner gelöst durch ein System mit einer oben beschriebenen Vorrichtung und einer Anzeigeeinrichtung, z.B. einem Bildschirm, und/oder einem Lautsprecher und/oder einer Steuereinrichtung für eine Vielzahl von Motoren, wobei die Schnittstelle mit der Anzeigeeinrichtung und/oder dem Lautsprecher und/oder der Steuereinrichtung verbunden und die an der Schnittstelle bereitgestellten Hinweise und/oder Steuerinformationen an die Anzeigeeinrichtung, den Lautsprecher und/oder die Steuereinrichtung übermittelbar sind, wobei die Hinweise und/oder Steuerinformationen durch die Anzeigeeinrichtung und/oder durch den Lautsprecher und/oder durch die Steuereinrichtung verarbeitet und/oder die Hinweise auf der Anzeigeeinrichtung und/oder dem Lautsprecher ausgegeben und/oder die Steuerinformationen durch die Steuereinrichtung derart an die Motoren übermittelt werden, dass die realen Kameras automatisch entsprechend der ermittelten Referenzinformationen der Kameras ausgerichtet werden. Beispielsweise kann jede Kamera einen Stellmotor aufweisen, der gemäß den an diesen übermittelten Steuerinformationen die Kamera entsprechend anhand der Zielmarken ausrichtet.

Nachfolgend werden weitere Vorteile, Merkmale und Anwendungsmöglichkeiten der Erfindung anhand eines bevorzugten Ausführungsbeispiels und den Zeichnungen beschrieben. Alle beschriebenen und/oder bildlich dargestellten Merkmale bilden dabei den Gegenstand der vorliegenden Erfindung, auch unabhängig von ihrer Zusammenfassung in den Ansprüchen und deren Rückbezügen.

Es zeigen schematisch:
- Fig. 1: ein Beispiel einer stereoskopischen Messung in einer perspektivischen Ansicht von der Seite,
- Fig. 2: ein erfindungsgemäßes System in einer perspektivischen Ansicht von der Seite,
- Fig. 3: CAD-Modell des Idealobjekts zu dem System gemäß Fig. 2 in einer Ansicht von vorn, und
- Fig. 4: einen Ausschnitt der Ansicht von Fig. 3.

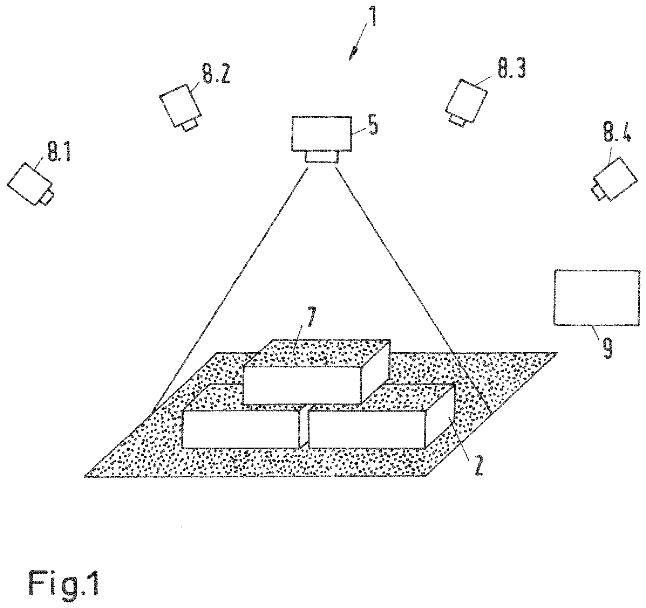

Fig. 1 zeigt ein System 1 zur Vermessung eines dreidimensionalen Objekts 2 mittels Stereoskopie beispielhaft in einer schematischen Darstellung. In der Fig. 1 ist das dreidimensionale Objekt der Übersichtlichkeit halber als drei übereinander liegende quaderförmige Steine dargestellt; die Erfindung bezieht sich aber ausdrücklich auf beliebige dreidimensionale Objekte 2, zu denen auch derartige Objekte gehören.

Das System 1 weist einen Projektor 5 zur Projektion eines (flächig und/oder zeitlich) kodierten Musters 7 auf die Oberfläche des Objekts 2 auf. In dem System 1 gemäß einer besonders bevorzugten Ausführungsform sind vier Kameras 8.1, 8.2, 8.3 und 8.4 zur Aufnahme des (als Szene bezeichneten) auf die Objektoberfläche projizierten Musters 7 vorgesehen. Der Projektor 5 kann ein herkömmlicher Diaprojektor oder ein digitaler Projektor sein, in dem das zu projizierende Muster 7 auf einem transparenten Display nach einer digitalen Vorlage erzeugbar ist.

Ferner ist eine mit dem Projektor 5 und den Kameras 8.1, 8.2, 8.3 und 8.4 in Verbindung stehende Recheneinheit 9 vorgesehen, die dazu eingerichtet ist, mittels Stereoskopie unter Verwendung des Musters 7, das ein vollständig flächig kodiertes Muster (z.B. ein Pseudo-Random-Muster) sein kann, eine Vermessung des Objekts 2 durchzuführen. Eine derartige Vermessung wird beispielsweise in dem Dokument DE 10 2018 108 874 A1 beschrieben.

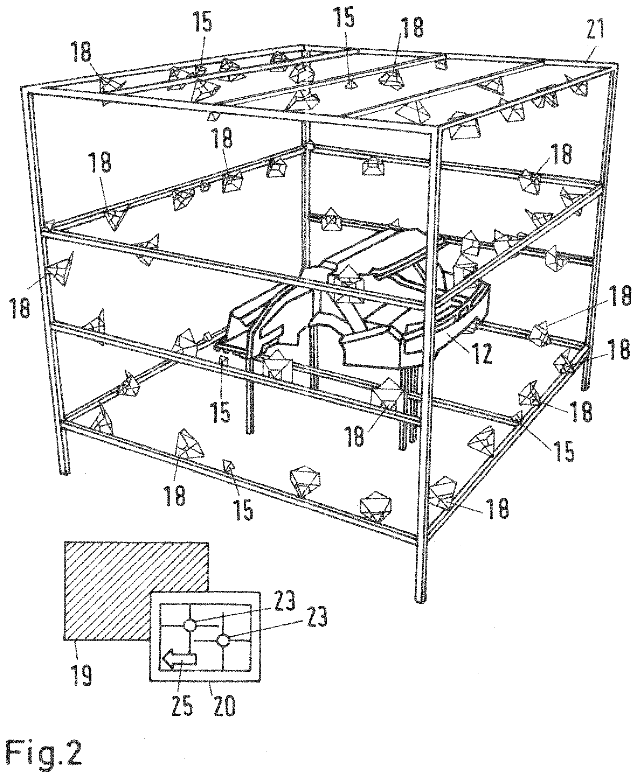

Fig. 2 zeigt ein Ausführungsbeispiel einer Vermessungszelle für die stereoskopische Vermessung eines Kfz-Karosserieteils 12 als Beispiel für eine Verwendung von fünfzig Kameras 18 und fünfzehn Projektoren 15, die an einem die Vermessungszelle umgebenden Gerüst oder Gestell 21 angeordnet sind. Sowohl die Kameras 18 als auch die Projektoren 15 sind an vorgegebenen Orten an dem Gestell 21 befestigt und grob ausgerichtet. Um die Projektoren 15 und die Kameras 18 vor der Vermessung der Karosserie 12 auszurichten, liegt in einer Speichereinheit einer mit den Kameras 18 und den Projektoren 15 verbundene Recheneinheit 19 ein CAD-Modell des Karosserieteils 12 vor. Die Ausrichtung der Projektoren 15 erfolgt vor der Ausrichtung der Kameras 18, indem das auf der Oberfläche des Karosserieteils 12 durch die Projektoren abgebildete Muster ausgerichtet wird. Als Vergleich wird die Ausrichtung des festgelegten Musters auf dem CAD-Modell herangezogen und so lange die Orientierung der Projektoren 15 geändert, bis das Muster so an der Oberfläche des Karosserieteils 12 verläuft, dass es mit der (virtuellen) Lage des Musters auf dem CAD-Modell übereinstimmt.

Ferner werden mithilfe des CAD-Modells des Karosserieteils 12 eine Vielzahl von Zielmarken 23 derart wie oben beschrieben automatisch, halbautomatisch oder interaktiv festgelegt, dass je Kamera mindestens eine Zielmarke, besser zwei oder drei Zielmarken auf dem Kamerabild verteilt, wahrgenommen werden können. Jede Zielmarke erhält bei dieser Festlegung eine eindeutige Kennzeichnung, beispielsweise eine eindeutige Nummer. Diese Zielmarken 23 können entweder zur Verfügung gestellt und in der Speichereinheit gespeichert werden oder durch den Nutzer eingegeben oder durch das Verfahren automatisch oder halbautomatisch bestimmt werden. Basierend auf diesem CAD-Modell, den festgelegten oder bereitgestellten Zielmarken 23 und den bekannten Orten der Projektoren 15 und der Kameras 18 an dem Gestell 21 berechnet die Recheneinheit 19 mittels bekannter Algorithmen der Photogrammetrie für jede Kamera Referenzinformationen, die als Identifikationsinformation Informationen darüber beinhaltet, welche Zielmarke(n) 23 der Vielzahl der Zielmarken in dem Bild einer ideal ausgerichteten Kamera 18 wahrgenommen werden. Die Identifikationsinformation umfasst beispielsweise die Nummern der Zielmarke(n) 23, die bei der idealen Ausrichtung durch die jeweilige Kamera vollständig wahrgenommen werden. Zudem werden für jede Kamera 18 und jede Zielmarke, die von dieser Kamera 18 erfasst wird, Ortsinformationen (z.B. Pixelkoordinaten der jeweiligen Zielmarke) berechnet, welche angeben, wo im Bild dieser Kamera 18 die jeweilige Zielmarke bei einer idealen Ausrichtung erscheinen wird. Diese Ortsinformation kann beispielsweise im Koordinatensystem der jeweiligen Kamera berechnet werden. Sind in einem Kamerabild mehrere Zielmarken 23 vorhanden, können diese auch mit einer Linie verbunden und diese Linie als weitere Linie verwendet werden.

Wenn die Referenzinformationen für jede der vorgegebenen Anzahl der Kameras, also für alle fünfzig Kameras 18 ermittelt wurde, können diese in der Speichereinheit der Recheneinheit 19 gespeichert werden.

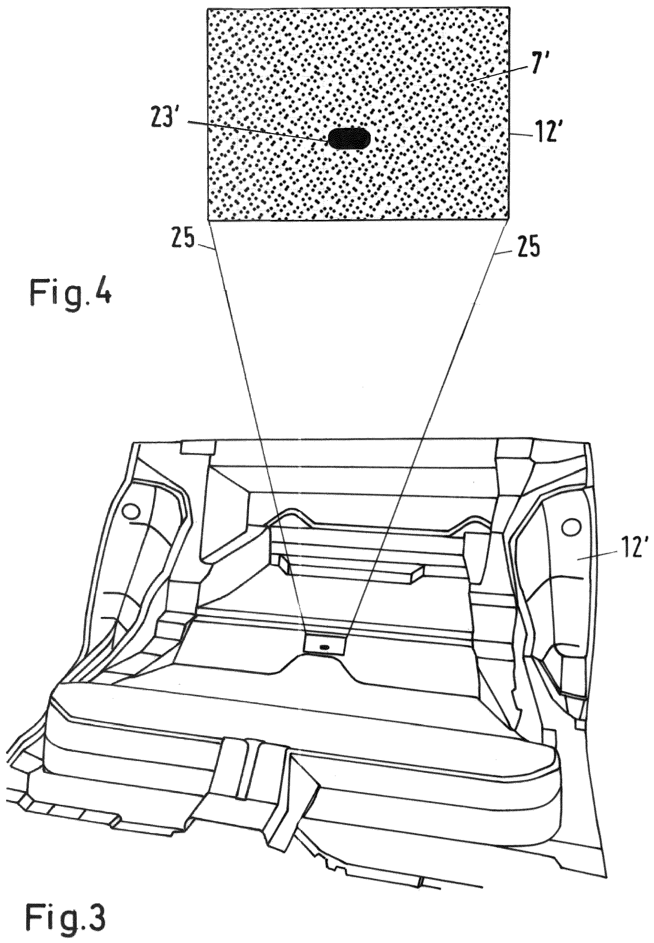

Eine Zielmarke für ein in Fig. 4 dargestelltes CAD-Modell 12' des Kfz-Karosserieteils 12 ist in Fig. 3 genauer sichtbar. Die Zielmarke wird durch eine etwa elliptische Öffnung 23' des CAD-Modells 12' gebildet, die sich im Bild durch einen dunklen Kontrast von der Umgebung abhebt. Durch die zwei schräg verlaufenden Linien wird gekennzeichnet, in welchem Bereich des CAD-Modells 12' sich die Öffnung 23' befindet. Alternativ und zusätzlich können weitere Öffnungen, Kanten, Erhebungen oder Einprägungen des CAD-Modells 12' Zielmarken bilden.

Die Ausrichtung der Kameras 18 wird für jede Kamera in Bezug auf ein reales Objekt 12 in Form eines realen Kfz-Karosserieteils 12 vorgenommen, das in einer vorgesehenen Position in der Messzelle mit dem Gerüst 21 angeordnet ist. Für jede Kamera 18 wird ein Bild des Karosserieteils 12 aufgenommen und an die Recheneinheit 19 weitergeleitet sowie in der Recheneinheit 19 mit der ermittelten Referenzinformation verglichen. Hierfür wird beispielsweise unter Verwendung von Algorithmen der Kreuzkorrelation nach den festgelegten Zielmarken in dem aufgenommenen Bild der jeweiligen Kamera 18 gesucht und festgestellt, ob die gemäß der Identifikationsinformation ermittelten Zielmarken bereits in dem Bild der jeweiligen Kamera 18 zu sehen sind oder nicht. Entsprechend ermittelt die Recheneinheit 19 Hinweise und/oder Steuerinformationen, die angeben, in welche Richtung und/oder über welchen Winkel(betrag) die Kamera basierend auf den Identifikationsinformationen verschwenkt werden muss, so dass die bestimmten Zielmarken durch die jeweilige Kamera erfasst werden. Anschließend wird das aufgenommene Bild der jeweiligen Kamera 18 mit den Ortsinformationen verglichen und die Abweichung der Lage der mindestens einen Zielmarke, die im Bild der Kamera angezeigt wird, von der Ortsinformation festgestellt. Entsprechend werden durch die Recheneinheit 19 auch Hinweise und/oder Steuerinformationen ermittelt, die angeben, in welche Richtung und/oder über welchen Winkel(betrag) die Kamera ausgerichtet werden muss, so dass die Lage der mindestens einen Zielmarke der Ortsinformation entspricht.

Die entsprechenden Hinweise und/oder Steuerinformationen werden dann an eine Schnittstelle weitergegeben, z.B. eine Schnittstelle für einen Bildschirm/Monitor 20 (siehe Fig. 2) und/oder eine Steuereinrichtung. Die Schnittstelle ist an der Recheneinheit vorgesehen. Die Referenzinformation wird dann auf dem an die Schnittstelle angeschlossenen Bildschirm 20 dargestellt, beispielsweise durch eine der Referenzinformation entsprechende Anordnung der Zielmarken 23 in einem Bild der Kamera 18. Auf dem Bildschirm 20 kann dann auch das von der Kamera 18 aufgenommene Bild der jeweiligen Kamera 18 überlagert dargestellt werden, so dass der Nutzer die Differenz zwischen Zielanordnung der Zielmarken 23, die sich aus der Referenzinformation ergibt, und der tatsächlichen Anordnung der Zielmarken im Bild der jeweiligen Kamera 18 erkennt. Zusätzlich kann, wie in Fig. 2 dargestellt, beispielsweise ein Pfeil 25 angezeigt werden, der die Richtung der Ausrichtung der Kamera 18 (durch die Richtung des Pfeils) sowie den Winkel(betrag) (symbolisiert durch die Länge des Pfeils) angibt.

Vor und nach jedem Ausrichtungsschritt wird aus der Summe der Abstandsquadrate der Zielmarken im Bild der realen Kamera und basierend auf der Referenzinformation ein Gütemaß (Beispiele siehe oben) ermittelt, welches angibt, wie gut die Ausrichtung bereits gelungen ist. Beispielsweises kann bei einer automatischen Ausrichtung der Kameras 18 die Ausrichtung abgebrochen werden, wenn das Gütemaß einen vorgegebenen Schwellwert unterschreitet.

Alternativ zu einer Ausrichtung durch einen Nutzer, beispielsweise einen Techniker, kann die Schnittstelle mit einer Steuereinrichtung verbunden sein, welche wiederum mit den Kameras verbunden ist. In diesem Ausführungsbeispiel besitzt jede Kamera einen Stellmotor, der das Verschwenken der Kameras entsprechend der von der Steuereinrichtung übermittelten Steuerinformationen durchführt, um eine ideale Ausrichtung der Kameras zu bewirken. Die Steuerinformationen für die Kameras werden durch die Steuereinrichtung basierend auf der Referenzinformation für die jeweilige Kamera und dem von der Kamera aufgenommenen Bild des realen Objekts berechnet. Dies kann beispielsweise mittels iterativer Methoden durchgeführt werden. Die Steuereinrichtung kann ebenfalls ein Gütemaß für die Ausrichtung jeder Kamera in der oben beschriebenen Weise berechnen und auf einer entsprechenden, mit der Steuereinrichtung verbundenen Anzeigeeinrichtung ausgegeben oder an die Recheneinheit zur weiteren Bearbeitung zurück übermittelt werden.

Nach der Ausrichtung der Kameras können diese noch, wie oben beschrieben intrinsisch und/oder extrinsisch kalibriert werden. Anschließend kann das zum Ausrichten verwendete reale Objekt und/oder weitere reale Objekte, die dem jeweiligen CAD-Modell entsprechen, vermessen werden. Wenn ein neues Objekt mit einer anderen Form vermessen werden soll, ist das oben beschriebene Verfahren gegebenenfalls einschließlich der Befestigung der Kameras und der Befestigung und Ausrichtung der Projektoren sowie der Kalibrierung der Kameras mit einem neuen CAD-Modell und anderen Zielmarken zu wiederholen, bevor das neue Objekt vermessen werden kann.

Das beschriebene Verfahren bewirkt eine schnelle und einfache Vorbereitung der Vermessung dreidimensionaler Objekte mittels einer Vielzahl von Kameras.

## Patentansprüche

1. Verfahren zur Ausrichtung einer vorbestimmten Anzahl von realen Kameras (18) für die Vermessung eines realen dreidimensionalen Objekts mit den Kameras und einem Muster in einem vorgegebenen Koordinatensystem, wobei für die Vermessung das Muster auf die Oberfläche des realen Objekts mittels mindestens eines Projektors (15) projiziert und dieses Muster mit jeder realen Kamera der vorbestimmten Anzahl zumindest abschnittsweise aufgenommen wird, wobei ein dreidimensionales virtuelles Modell eines dem realen Objekt entsprechenden Idealobjekts (12') vorhanden ist, mit folgenden Schritten:
a) Ausrichten des mindestens einen Projektors an der Oberfläche des realen Objekts derart, dass die Lage des Musters einer vorgegebenen Lage des Musters an dem virtuellen Modell entspricht,
b) Festlegung oder Bereitstellen einer Vielzahl von Zielmarken (23) auf der Oberfläche des Idealobjekts in dem dreidimensionalen virtuellen Modell,
c) automatische Ermittlung einer Referenzinformation für jede Kamera, wobei die Referenzinformation eine Identifikationsinformation umfasst, welche die Information beinhaltet, welche mindestens eine Zielmarke der Vielzahl von Zielmarken die jeweilige Kamera erfasst, wenn die jeweilige Kamera und der Projektor des Musters in einer vorgegebenen Weise angeordnet und ausgerichtet sind, und die Referenzinformation außerdem eine zur jeweiligen Kamera und Zielmarke zugehörige Ortsinformation umfasst, welche die Information beinhaltet, wo in einem erfassten Bild des Sichtbereichs der jeweiligen Kamera diese mindestens eine Zielmarke erscheint, wenn die jeweilige Kamera und der mindestens eine Projektor des Musters in der vorgegebenen Weise angeordnet und ausgerichtet sind, wobei die Ermittlung der Referenzinformation für jede Kamera basierend auf dem dreidimensionalen virtuellen Modell des Idealobjekts und entsprechenden virtuellen Repräsentationen der Kameras und des Musters durchgeführt wird, und
d) Aufnehmen eines Bildes der Oberfläche eines realen Objekts mit einer realen Kamera, automatisches Berechnen von Hinweisen und/oder Steuerinformationen zum Finden der festgelegten Zielmarken im Bild der jeweiligen realen Kamera und zum Ausrichten der jeweiligen realen Kamera mithilfe des realen Objekts basierend auf der ermittelten Referenzinformation zur jeweiligen Kamera sowie Bereitstellen der Hinweise und/oder Steuerinformationen zur jeweiligen Kamera an einer vorgegebenen Schnittstelle,
wobei Schritt d) für jede Kamera der vorbestimmten Anzahl der Kameras durchgeführt wird.

2. Verfahren nach Anspruch 1, **dadurch gekennzeichnet, dass** mit jeder realen Kamera und dem realen Objekt unter Verwendung eines auf die Oberfläche des realen Objekts projizierten realen Musters die mindestens eine Zielmarke auf der Oberfläche des realen Objekts entsprechend der Identifikationsinformation im Bild der jeweiligen Kamera gesucht und anschließend die Hinweise und/oder Steuerinformationen zum Finden der mindestens einen Zielmarke berechnet werden.

3. Verfahren nach einem der vorhergehenden Ansprüche, **dadurch gekennzeichnet, dass** Hinweise und/oder Steuerinformationen zum Ausrichten der jeweiligen reale Kamera durch Vergleichen der Identifikationsinformation und der im Bild der jeweiligen realen Kamera sichtbaren, mindestens einen Zielmarke und/oder durch Vergleichen der ermittelten Ortsinformation der mindestens einen Zielmarke für die jeweilige Kamera mit der Lage der mindestens einen Zielmarke im Bild der jeweiligen realen Kamera ermittelt werden.

4. Verfahren nach einem der vorhergehenden Ansprüche, **dadurch gekennzeichnet, dass** aus der Summe der Abstandsquadrate der Zielmarken im Bild der realen Kamera und basierend auf der Referenzinformation ein Gütemaß für die Abweichung der aktuellen Ausrichtung der jeweiligen realen Kamera von der für die jeweilige Kamera ermittelten Referenzinformation bestimmt und als Hinweis und/oder Steuerinformation an der vorgegebenen Schnittstelle zur Verfügung gestellt wird, wobei das Gütemaß angibt, wie gut die Ausrichtung bereits gelungen ist.

5. Verfahren nach einem der vorhergehenden Ansprüche, **dadurch gekennzeichnet, dass** die Daten des dreidimensionalen virtuellen Modells des Idealobjekts CAD-Daten darstellen und/oder dass das Muster ein flächig kodiertes Muster darstellt.

6. Verfahren nach einem der vorhergehenden Ansprüche, **dadurch gekennzeichnet, dass** die Schnittstelle mit einer Anzeigeeinrichtung (20), z.B. einem Bildschirm, und/oder einem Lautsprecher und/oder einer Steuereinrichtung für eine Vielzahl von Motoren verbunden ist, wobei die Hinweise und/oder Steuerinformationen durch die Anzeigeeinrichtung und/oder den Lautsprecher und/oder die Steuereinrichtung verarbeitet werden und/oder auf der Anzeigeeinrichtung und/oder dem Lautsprecher ausgegeben und/oder durch die Steuereinrichtung derart an die Motoren übermittelt werden, dass die realen Kameras automatisch entsprechend der ermittelten Referenzinformationen der Kameras ausgerichtet werden.

7. Computerprogramm mit Programmcode, das auf einem maschinenlesbaren Datenträger gespeichert ist, zur Durchführung der Verfahrensschritte nach einem der Ansprüche 1 bis 6, wenn das Computerprogramm auf einer Recheneinheit ausgeführt wird.

8. Vorrichtung zur Ausrichtung einer vorbestimmten Anzahl von realen Kameras (18) für die Vermessung eines realen dreidimensionalen Objekts (12) mit den Kameras und einem Muster in einem vorgegebenen Koordinatensystem, wobei für die Vermessung das Muster auf die Oberfläche des realen Objekts mittels mindestens eines Projektors projizierbar und mit jeder realen Kamera zumindest abschnittsweise aufnehmbar ist, wobei ein dreidimensionales virtuelles Modell eines dem realen Objekt entsprechenden Idealobjekts (12') vorliegt, wobei
A) der mindestens eine Projektor an der Oberfläche des realen Objekts derart ausrichtbar ist, dass die Lage des Musters einer vorgegebenen Lage des Musters an dem virtuellen Modell entspricht,
wobei die Vorrichtung eine Recheneinheit (19) aufweist, die dazu eingerichtet ist,
B) eine Vielzahl von Zielmarken (23) auf der Oberfläche des Idealobjekts in dem dreidimensionalen virtuellen Modell festzulegen oder bereitzustellen,
C) automatisch eine Referenzinformation für jede Kamera zu ermitteln, wobei die Referenzinformation eine Identifikationsinformation umfasst, welche die Information beinhaltet, welche mindestens eine Zielmarke der Vielzahl von Zielmarken die jeweilige Kamera erfasst, wenn die jeweilige Kamera und der Projektor des Musters in einer vorgegebenen Weise angeordnet und ausgerichtet sind, und die Referenzinformation außerdem eine zur jeweiligen Kamera und Zielmarke zugehörige Ortsinformation umfasst, welche die Information beinhaltet, wo in einem erfassten Bild des Sichtbereichs der jeweiligen Kamera diese mindestens eine Zielmarke erscheint, wenn die jeweilige Kamera und der mindestens eine Projektor des Musters in der vorgegebenen Weise angeordnet und ausgerichtet sind, wobei die Ermittlung der Referenzinformation für jede Kamera basierend auf dem dreidimensionalen virtuellen Modell des Idealobjekts und entsprechenden virtuellen Repräsentationen der Kameras und des Musters erfolgt, sowie
D) ein Bild der Oberfläche eines realen Objekts mit einer realen Kamera aufzunehmen, automatisch Hinweise und/oder Steuerinformationen zum Finden der festgelegten Zielmarken im Bild der jeweiligen realen Kamera und zum Ausrichten der jeweiligen realen Kamera mithilfe eines realen Objekts basierend auf der ermittelten Referenzinformation zur jeweiligen Kamera zu ermitteln und die Hinweise und/oder Steuerinformationen an einer vorgegebenen Schnittstelle automatisch bereitzustellen,
wobei die Recheneinheit dazu eingerichtet ist, Schritt D) für jede Kamera der vorbestimmten Anzahl von Kameras durchzuführen.

9. Vorrichtung nach Anspruch 8, **dadurch gekennzeichnet, dass** die Recheneinheit derart eingerichtet ist, dass mit jeder realen Kamera und dem realen Objekt unter Verwendung eines auf die Oberfläche des realen Objekts projizierten realen Musters die mindestens eine Zielmarke auf der Oberfläche des realen Objekts entsprechend der Identifikationsinformation im Bild der jeweiligen Kamera gesucht und anschließend die Hinweise und/oder Steuerinformationen zum Finden der mindestens einen Zielmarke berechnet werden.

10. Vorrichtung nach einem der Ansprüche 8 bis 9, **dadurch gekennzeichnet, dass** die Recheneinheit derart eingerichtet ist, dass Hinweise und/oder Steuerinformationen zum Ausrichten der jeweiligen reale Kamera durch Vergleichen der Identifikationsinformation und der im Bild der jeweiligen realen Kamera sichtbaren, mindestens einen Zielmarke und/oder durch Vergleichen der ermittelten Ortsinformation der mindestens einen Zielmarke für die jeweilige Kamera mit der Lage der mindestens einen Zielmarke im Bild der jeweiligen realen Kamera ermittelt werden.

11. Vorrichtung nach einem der Ansprüche 8 bis 10, **dadurch gekennzeichnet, dass** die Recheneinheit derart eingerichtet ist, dass aus der Summe der Abstandsquadrate der Zielmarken im Bild der realen Kamera und basierend auf der Referenzinformation ein Gütemaß für die Abweichung der aktuellen Ausrichtung der jeweiligen realen Kamera von der für die jeweilige Kamera ermittelten Referenzinformation bestimmt und als Hinweis und/oder Steuerinformation an der vorgegebenen Schnittstelle zur Verfügung gestellt wird, wobei das Gütemaß angibt, wie gut die Ausrichtung bereits gelungen ist.

12. Vorrichtung nach einem der Ansprüche 8 bis 11, **dadurch gekennzeichnet, dass** die Daten des dreidimensionalen virtuellen Modells des Idealobjekts CAD-Daten darstellen und/oder dass das Muster ein flächig kodiertes Muster darstellt.

13. Vorrichtung nach einem der Ansprüche 8 bis 12, **dadurch gekennzeichnet, dass** die Vorrichtung zusätzlich mindestens eine Hilfskamera aufweist.

14. Vorrichtung nach einem der Ansprüche 8 bis 13, **dadurch gekennzeichnet, dass** die Schnittstelle mit einer Anzeigeeinrichtung, z.B. einem Bildschirm, und/oder einem Lautsprecher und/oder einer Steuereinrichtung für eine Vielzahl von Motoren verbindbar ist, wobei die Hinweise und/oder Steuerinformationen an die Anzeigeeinrichtung und/oder an den Lautsprecher und/oder an die Steuereinrichtung weitergeleitet werden.

15. System aufweisend eine Vorrichtung nach einem der Ansprüche 8 bis 13, und eine Anzeigeeinrichtung (20), z.B. einen Bildschirm, und/oder einen Lautsprecher und/oder eine Steuereinrichtung für eine Vielzahl von Motoren, wobei die Schnittstelle mit der Anzeigeeinrichtung und/oder dem Lautsprecher und/oder der Steuereinrichtung verbunden und die an der Schnittstelle bereitgestellten Hinweise und/oder Steuerinformationen an die Anzeigeeinrichtung, den Lautsprecher und/oder die Steuereinrichtung übermittelbar sind, wobei die Hinweise und/oder Steuerinformationen durch die Anzeigeeinrichtung und/oder durch den Lautsprecher und/oder durch die Steuereinrichtung verarbeitet und/oder die Hinweise auf der Anzeigeeinrichtung und/oder dem Lautsprecher ausgegeben und/oder die Steuerinformationen durch die Steuereinrichtung derart an die Motoren übermittelt werden, dass die realen Kameras automatisch entsprechend der ermittelten Referenzinformationen der Kameras ausgerichtet werden.

## Claims

1. A method for establishing the orientation of a predetermined number of real cameras (18) for the measuring of a real three-dimensional object using the cameras and a pattern in a predetermined coordinate system, wherein for the said measuring the pattern is projected onto the surface of the real object by means of at least one projector (15) and said pattern is recorded at least sectionwise with each real camera of the predetermined number, wherein a three-dimensional virtual model of an ideal object (12') corresponding to the real object exists, with the following steps:
a) orientation of the at least one projector on the surface of the real object in such a way that the position of the pattern corresponds to a predetermined position of the pattern on the virtual model,
b) definition or provision of a plurality of target marks (23) on the surface of the ideal object in the three-dimensional virtual model,
c) automatically determining reference information for each camera, wherein the reference information includes identification information containing the information which at least one of the plurality of target marks the respective camera captures when the respective camera and the projector of the pattern are arranged and oriented in a predetermined manner, and the reference information also includes location information associated with the respective camera and target mark, which contains the information where in a captured image of the field of view of the respective camera said at least one target mark appears when the respective camera and the at least one projector of the pattern are arranged and oriented in the predetermined manner, wherein the determination of the reference information for each camera is carried out based on the three-dimensional virtual model of the ideal object and corresponding virtual representations of the cameras and the pattern, and
d) recording an image of the surface of a real object with a real camera, automatically calculating indications and/or control information for finding the specified target marks in the image of the respective real camera and for orienting the respective real camera with the aid of the real object based on the determined reference information for the respective camera, and providing the indications and/or control information to the respective camera at a predetermined interface,
wherein step d) is carried out for each camera of the predetermined number of cameras.

2. The method according to claim 1, **characterized in that**, using a real pattern projected onto the surface of the real object, the at least one target mark on the surface of the real object is searched for in the image of the respective camera using each real camera and the real object, and then the indications and/or control information for finding the at least one target mark are calculated.

3. The method according to any one of the preceding claims, **characterized in that** indications and/or control information for orienting the respective real camera are determined by comparing the identification information and the at least one target mark visible in the image of the respective real camera and/or by comparing the determined location information of the at least one target mark for the respective camera with the position of the at least one target mark in the image of the respective real camera.

4. The method according to any one of the preceding claims, **characterized in that** a quality measure for the deviation of the current orientation of the respective real camera from the reference information derived for the respective camera is determined from the sum of the squares of the distance of the target marks in the image of the real camera and based on the reference information and made available as an indication and/or control information at the predetermined interface, wherein the quality measure indicates how well the orientation has already been achieved.

5. The method according to any one of the preceding claims, **characterized in that** the data of the three-dimensional virtual model of the ideal object is CAD data and/or **in that** the pattern is a two-dimensionally coded pattern.

6. The method according to any one of the preceding claims, **characterized in that** the interface is connected to a display device (20), e.g., a screen and/or to a loudspeaker and/or to a control device for a plurality of motors, wherein the indications and/or control information are processed by the display and/or by the loudspeaker and/or by the control device and/or outputted on the display device and/or by the loudspeaker and/or transmitted by the control device to the motors in such a way that the real cameras are automatically oriented in accordance with the determined reference information of the cameras.

7. A computer program with program code, stored on a machine-readable data carrier, for carrying out the method steps according to any one of claims 1 to 6, if the computer program is executed on a computing unit.

8. A device for providing the orientation of a predetermined number of real cameras (18) for measuring a real three-dimensional object (12) using the cameras and a pattern in a predetermined coordinate system, wherein for the measurement the pattern is projectable onto the surface of the real object by means of at least one projector and is recordable at least sectionwise with each real camera, wherein a three-dimensional virtual model of an ideal object (12') corresponding to the real object exists, wherein
A) the at least one projector is alignable on the surface of the real object in such a way that the position of the pattern corresponds to a predetermined position of the pattern on the virtual model,
wherein the device comprises a computing unit (19) configured to
B) define or provide a plurality of target marks (23) on the surface of the ideal object in the three-dimensional virtual model,
C) automatically determining reference information for each camera, wherein the reference information comprises identification information that includes the information as to which at least one target mark of the plurality of target marks the respective camera captures when the respective camera and the projector of the pattern are arranged and oriented in a predetermined manner, and the reference information also comprises location information associated with the respective camera and target mark, which includes the information where in a captured image of the field of view of the respective camera the at least one target mark appears when the respective camera and the at least one projector of the pattern are arranged and oriented in the predetermined manner, wherein the reference information for each camera is determined based on the three-dimensional virtual model of the ideal object and corresponding virtual representations of the cameras and the pattern, and
D) recording an image of the surface of a real object with a real camera, automatically determining indications and/or control information for finding the specified target marks in the image of the respective real camera and for orienting the respective real camera with the help of a real object based on the determined reference information for the respective camera and automatically providing the indications and/or control information at a predetermined interface, wherein the computing unit is configured to perform step D) for each camera of the predetermined number of cameras.

9. The device according to claim 8, **characterized in that** the computing unit is configured to search by means of each real camera and the real object, using a real pattern projected onto the surface of the real object, for the at least one target mark on the surface of the real object in accordance with the identification information in the image of the respective camera and subsequently to calculate the indications and/or control information for finding the at least one target mark.

10. The device according to any one of claims 8 to 9, **characterized in that** the computing unit is configured to determine indications and/or control information for orienting the respective real camera by comparing the identification information and at least one target mark visible in the image of the respective real camera and/or by comparing the determined location information of the at least one target mark for the respective camera with the position of the at least one target mark in the image of the respective real camera.

11. The device according to any one of claims 8 to 10, **characterized in that** the computing unit is configured to determine a quality measure for the deviation of the current orientation of the respective real camera from the reference information determined for the respective camera from the sum of the squares of the distances of the target marks in the image of the real camera and based on the reference information and to make it available as an indication and/or control information at the predetermined interface, wherein the quality measure indicates how well the orientation has already been achieved.

12. The device according to any one of claims 8 to 11, **characterized in that** the data of the three-dimensional virtual model of the ideal object is CAD data and/or that the pattern is a two-dimensionally coded pattern.

13. The device according to any one of claims 8 to 12, **characterized in that** the device additionally comprises at least one auxiliary camera.

14. The device according to any one of claims 8 to 13, **characterized in that** the interface is connectable to a display device, e.g. a screen, and/or to a loudspeaker and/or to a control device for a plurality of motors, wherein the indications and/or control information are transmitted to the display device and/or to the loudspeaker and/or to the control device.

15. A system comprising a device according to any one of claims 8 to 13, and a display device (20), e.g., a screen and/or a loudspeaker and/or a control device for a plurality of motors, wherein the interface is connected to the display device and/ or to the loudspeaker and/or to the control device, and the indications and/or control information provided at the interface can be transmitted to the display device, to the loudspeaker and/or to the control device, wherein the indications and/or control information are processed by the display device and/or by the loud speaker and/or by the control device and/or the indications are output on the display device and/or on the loudspeaker and/or the control information is transmitted by the control device to the motors in such a way that the real cameras are automatically oriented in accordance with the determined reference information of the cameras.

## Revendications

1. Procédé d'orientation d'un nombre prédéterminé de caméras réelles (18) pour la mesure d'un objet réel tridimensionnel avec les caméras et un motif dans un système de coordonnées prédéfini, dans lequel pour la mesure, le motif est projeté sur la surface de l'objet réel au moyen d'au moins un projecteur (15) et ce motif est enregistré au moins par sections avec chaque caméra réelle du nombre prédéterminé, dans lequel un modèle virtuel tridimensionnel d'un objet idéal (12') correspondant à l'objet réel est présent, avec les étapes suivantes :
a) l'orientation de l'au moins un projecteur sur la surface de l'objet réel de sorte que la position du motif corresponde à une position prédéfinie du motif sur le modèle virtuel,
b) la définition ou fourniture d'une pluralité de cibles (23) sur la surface de l'objet idéal dans le modèle virtuel tridimensionnel,
c) la détermination automatique d'une information de référence pour chaque caméra, dans lequel l'information de référence comprend une information d'identification, laquelle contient l'information concernant quelle au moins une cible de la pluralité de cibles la caméra respective acquiert lorsque la caméra respective et le projecteur du motif sont disposés et orientés d'une manière prédéfinie, et l'information de référence comprend en outre une information de localisation associée à la caméra et à la cible respectives, laquelle comporte l'information concernant l'endroit où cette au moins une cible apparaît dans une image acquise du champ de vision de la caméra respective lorsque la caméra respective et l'au moins un projecteur du motif sont disposés et orientés de la manière prédéfinie, dans lequel la détermination de l'information de référence pour chaque caméra est réalisée sur la base du modèle virtuel tridimensionnel de l'objet idéal et des représentations virtuelles correspondantes des caméras et du motif, et
d) l'enregistrement d'une image de la surface d'un objet réel avec une caméra réelle, le calcul automatique des indications et/ou informations de commande pour trouver les cibles définies dans l'image de la caméra réelle respective et pour orienter la caméra réelle respective à l'aide de l'objet réel sur la base de l'information de référence déterminée pour la caméra respective ainsi que la fourniture des indications et/ou informations de commande relatives à la caméra respective sur une interface prédéfinie,
dans lequel l'étape d) est réalisée pour chaque caméra du nombre prédéterminé de caméras.

2. Procédé selon la revendication 1, **caractérisé en ce qu'**avec chaque caméra réelle et l'objet réel, en utilisant un motif réel projeté sur la surface de l'objet réel, l'au moins une cible est recherchée sur la surface de l'objet réel en fonction de l'information d'identification dans l'image de la caméra respective, puis les indications et/ou informations de commande sont calculées pour trouver l'au moins une cible.

3. Procédé selon l'une quelconque des revendications précédentes, **caractérisé en ce que** les indications et/ou informations de commande pour l'orientation de la caméra réelle respective sont déterminées par comparaison de l'information d'identification et de l'au moins une cible visible dans l'image de la caméra réelle respective et/ou par comparaison de l'information de localisation déterminée de l'au moins une cible pour la caméra respective avec la position de l'au moins une cible dans l'image de la caméra réelle respective.

4. Procédé selon l'une quelconque des revendications précédentes, **caractérisé en ce que**, à partir de la somme des carrés de distance des cibles dans l'image de la caméra réelle et sur la base de l'information de référence, un niveau de qualité est déterminé pour l'écart de l'orientation actuelle de la caméra réelle respective par rapport à l'information de référence déterminée pour la caméra respective et est mise à disposition sous forme d'indication et/ou d'information de commande sur l'interface prédéfinie, dans lequel le niveau de qualité indique dans quelle mesure l'orientation est déjà réussie.

5. Procédé selon l'une quelconque des revendications précédentes, **caractérisé en ce que** les données du modèle virtuel tridimensionnel de l'objet idéal représentent des données CAO et/ou que le motif représente un motif codé en surface.

6. Procédé selon l'une quelconque des revendications précédentes, **caractérisé en ce que** l'interface est reliée à un appareil d'affichage (20), par exemple un écran, et/ou un haut-parleur et/ou un appareil de commande pour une pluralité de moteurs, dans lequel les indications et/ou informations de commande sont traitées par l'appareil d'affichage et/ou le haut-parleur et/ou l'appareil de commande et/ou sont émises sur l'appareil d'affichage et/ou le haut-parleur et/ou transmises par l'appareil de commande aux moteurs de sorte que les caméras réelles soient orientées automatiquement en fonction des informations de référence déterminées des caméras.

7. Programme informatique avec code de programme qui est enregistré sur un support de données lisible par machine pour la réalisation des étapes de procédé selon l'une quelconque des revendications 1 à 6, lorsque le programme informatique est exécuté sur une unité de calcul.

8. Dispositif d'orientation d'un nombre prédéterminé de caméras réelles (18) pour la mesure d'un objet réel tridimensionnel (12) avec les caméras et un motif dans un système de coordonnées prédéfini, dans lequel pour la mesure, le motif est projetable sur la surface de l'objet réel au moyen d'au moins un projecteur et peut être enregistré au moins par sections avec chaque caméra réelle, dans lequel un modèle virtuel tridimensionnel d'un objet idéal (12') correspondant à l'objet réel est présent, dans lequel :
A) l'au moins un projecteur est orientable sur la surface de l'objet réel de sorte que la position du motif corresponde à une position prédéfinie du motif sur le modèle virtuel,
dans lequel le dispositif présente une unité de calcul (19) qui est conçue pour
B) définir ou fournir une pluralité de cibles (23) sur la surface de l'objet idéal dans le modèle virtuel tridimensionnel,
C) déterminer automatiquement une information de référence pour chaque caméra, dans lequel l'information de référence comprend une information d'identification, laquelle comporte l'information concernant quelle au moins une cible de la pluralité de cibles la caméra respective acquiert lorsque la caméra respective et le projecteur du motif sont disposés et orientés d'une manière prédéfinie, et l'information de référence comprend en outre une information de localisation associée à la caméra et à la cible respectives, laquelle comporte l'information concernant l'endroit où cette au moins une cible apparaît dans une image acquise du champ de vision de la caméra respective lorsque la caméra respective et l'au moins un projecteur du motif sont disposés et orientés de la manière prédéfinie, dans lequel la détermination de l'information de référence pour chaque caméra s'effectue sur la base du modèle virtuel tridimensionnel de l'objet idéal et des représentations virtuelles correspondantes des caméras et du motif, et
D) enregistrer une image de la surface d'un objet réel avec une caméra réelle, déterminer automatiquement des indications et/ou informations de commande pour trouver les cibles définies dans l'image de la caméra réelle respective et pour orienter la caméra réelle respective à l'aide d'un objet réel sur la base des informations de référence déterminées pour la caméra respective et fournir automatiquement les indications et/ou informations de commande sur une interface prédéfinie,
dans lequel l'unité de calcul est conçue pour réaliser l'étape D) pour chaque caméra du nombre prédéterminé de caméras.

9. Dispositif selon la revendication 8, **caractérisé en ce que** l'unité de calcul est conçue de sorte qu'avec chaque caméra réelle et l'objet réel, à l'aide d'un motif réel projeté sur la surface de l'objet réel, l'au moins une cible est recherchée sur la surface de l'objet réel en fonction de l'information d'identification dans l'image de la caméra respective et ensuite les indications et/ou informations de commande sont calculées pour trouver l'au moins une cible.

10. Dispositif selon l'une quelconque des revendications 8 à 9, **caractérisé en ce que** l'unité de calcul est conçue de sorte que des indications et/ou informations de commande pour l'orientation de la caméra réelle respective par comparaison de l'information d'identification et de l'au moins une cible visible dans l'image de la caméra réelle respective, et/ou par comparaison de l'information de localisation déterminée de l'au moins une cible pour la caméra respective avec la position de l'au moins une cible dans l'image de la caméra réelle respective.

11. Dispositif selon l'une quelconque des revendications 8 à 10, **caractérisé en ce que** l'unité de calcul est conçue de sorte qu'à partir de la somme des carrés de distance des cibles dans l'image de la caméra réelle et sur la base de l'information de référence, un niveau de qualité est déterminé pour l'écart de l'orientation actuelle de la caméra réelle respective par rapport à l'information de référence déterminée pour la caméra respective et est mise à disposition sous forme d'indication et/ou d'information de commande sur l'interface prédéfinie, dans lequel le niveau de qualité indique dans quelle mesure l'orientation est déjà réussie.

12. Dispositif selon l'une quelconque des revendications 8 à 11, **caractérisé en ce que** les données du modèle virtuel tridimensionnel de l'objet idéal représentent des données CAO et/ou que le motif représente un motif codé en surface.

13. Dispositif selon l'une quelconque des revendications 8 à 12, **caractérisé en ce que** le dispositif présente en outre au moins une caméra auxiliaire.

14. Dispositif selon l'une quelconque des revendications 8 à 13, **caractérisé en ce que** l'interface peut être reliée à un appareil d'affichage, par exemple un écran, et/ou un haut-parleur et/ou un appareil de commande pour une pluralité de moteurs, dans lequel les indications et/ou informations de commande sont transmises à l'appareil d'affichage et/ou au haut-parleur et/ou à l'appareil de commande.

15. Système présentant un dispositif selon l'une quelconque des revendications 8 à 13, et un appareil d'affichage (20), par exemple un écran, et/ou un haut-parleur et/ou un appareil de commande pour une pluralité de moteurs, dans lequel l'interface est reliée à l'appareil d'affichage et/ou au haut-parleur et/ou à l'appareil de commande et les indications et/ou informations de commande fournies à l'interface peuvent être transmises à l'appareil d'affichage, au haut-parleur et/ou à l'appareil de commande, dans lequel les indications et/ou informations de commande sont traitées par l'appareil d'affichage et/ou par le haut-parleur et/ou par l'appareil de commande et/ou les indications sont émises sur l'appareil d'affichage et/ou le haut-parleur et/ou les informations de commande sont transmises par l'appareil de commande aux moteurs de sorte que les caméras réelles soient automatiquement orientées en fonction des informations de référence déterminées des caméras.
